(19)

**Europäisches Patentamt**
**European Patent Office**
**Office européen des brevets**

(11) **EP 4 009 215 B1**

(12) **EUROPEAN PATENT SPECIFICATION**

(45) Date of publication and mention
of the grant of the patent:
**22.01.2025  Bulletin 2025/04**

(21) Application number: **20873343.6**

(22) Date of filing: **12.10.2020**

(51) International Patent Classification (IPC):
**G06F 30/13** (2020.01)  **G06F 30/12** (2020.01)
**G06F 30/20** (2020.01)  G06F 119/14 (2020.01)

(52) Cooperative Patent Classification (CPC):
**G06F 30/20; G06F 30/12; G06F 30/13;**
G06F 2119/14

(86) International application number:
**PCT/CN2020/120427**

(87) International publication number:
**WO 2021/088597 (14.05.2021 Gazette 2021/19)**

(54) **NONLINEAR ELASTIC COUNTERFORCE CENTROID ALGORITHM FOR PREFABRICATED MEMBER SEALING GASKET**

NICHTLINEARER ELASTISCHER GEGENKRAFT-SCHWERPUNKT-ALGORITHMUS FÜR EINE DICHTUNG AUS VORGEFERTIGTEN TEILEN

ALGORITHME DE CENTROÏDE DE FORCE ANTAGONISTE ÉLASTIQUE NON LINÉAIRE POUR JOINT D'ÉTANCHÉITÉ D'ÉLÉMENT PRÉFABRIQUÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.11.2019  CN 201911067076**

(43) Date of publication of application:
**08.06.2022  Bulletin 2022/23**

(73) Proprietor: **Beijing Urban Construction Design & Development Group Co., Limited Beijing 100037 (CN)**

(72) Inventors:
• **YANG, Xiuren**
  **Beijing 100037 (CN)**
• **HUANG, Meiqun**
  **Beijing 100037 (CN)**
• **PENG, Zhiyong**
  **Beijing 100037 (CN)**
• **LIN, Fang**
  **Beijing 100037 (CN)**

(74) Representative: **Franke, Dirk**
**Franke & Partner**
**Patent- und Rechtsanwälte**
**Widenmayerstraße 25**
**80538 München (DE)**

(56) References cited:
WO-A1-2018/151604      CN-A- 104 930 972
CN-A- 106 021 781      CN-A- 110 020 474
CN-A- 111 008 415      US-A1- 2003 020 717

• **LIN LIU ET AL: "Analytical Method of Gasket Stress on Bolted Flanged Connections in Consideration of External Bending Moments and Elements Creep", MEASURING TECHNOLOGY AND MECHATRONICS AUTOMATION, 2009. ICMTMA '09. INTERNATIONAL CONFERENCE ON, IEEE, PISCATAWAY, NJ, USA, 11 April 2009 (2009-04-11), pages 750 - 753, XP031511776, ISBN: 978-0-7695-3583-8**
• **LI XIAOJUN ET AL: "Experimental and analytical study on longitudinal joint opening of concrete segmental lining", TUNNELLING AND UNDERGROUND SPACE TECHNOLOGY, vol. 46, 6 December 2014 (2014-12-06), pages 52 - 63, XP029134001, ISSN: 0886-7798, DOI: 10.1016/ J.TUST.2014.11.002**

EP 4 009 215 B1

- CHEN ZHI ET AL: "The effect of the O-ring on the end face deformation of mechanical seals based on numerical simulation", TRIBOLOGY INTERNATIONAL, vol. 97, 1 February 2016 (2016-02-01), pages 278 - 287, XP029450919, ISSN: 0301-679X, DOI: 10.1016/J.TRIBOINT.2016.01.038
- XIUREN YANG ET AL: "Calculation of dynamic assembly and tensioning loads at multiple points of prefabricated structure", TUNNELLING AND UNDERGROUND SPACE TECHNOLOGY, ELSEVIER SCIENCE PUBLISHING, NEW YORK,NY, US, vol. 126, 25 May 2022 (2022-05-25), XP087088259, ISSN: 0886-7798, [retrieved on 20220525], DOI: 10.1016/J.TUST.2022.104564

**Description**

TECHNICAL FIELD OF THE INVENTIION

The invention relates to the technical field of building engineering, in particular to a Centroid calculation method for nonlinear elastic reaction force of gasket of prefabricated components of assembly type.

BACKGROUND OF THE INVENTIION

Rubber gasket is usually used for waterproofing of prefabricated structural assembly seams. During assembly of components, concrete components squeeze and compress the rubber gasket to form waterproof seals. According to the functional requirements of waterproof sealing, the rubber gasket is continuously and linearly distributed on the contact surface of the component, and can be linear, curved or complex linear type composed of straight line and curve. When the size of the component is large, it is sometimes arranged with two (for double seal) or more rubber gaskets to enhance waterproof performance.

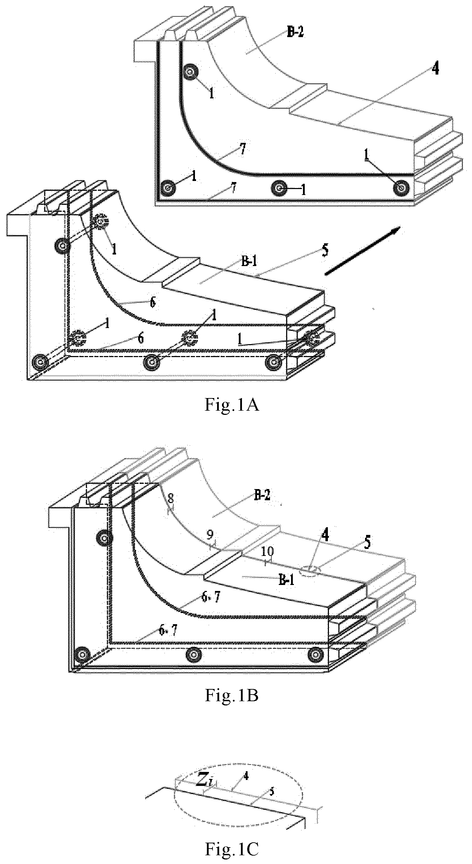

As shown in Figs. 1A and 1B, when assembling components of assembly type, each component (including mobile component B-1 and fixed component B-2) is required to be tensioned by using several jacks at points of multiple bolt hole positions 1, to cause the rubber gaskets (such as a rubber gasket 6 of the mobile component B-1 and a rubber gasket 7 of the fixed component B-2) to be compressed and deformed. Gaps 8, 9 and 10 (hereinafter referred to as seam width $Z_i$) between the assembling components represent compression degrees of the rubber gaskets. An object of assembling component is to make the seam widths 8, 9 and 10 between the assembling components as even as possible by use of the tension of the Jack at several points. However, in the process of assembly and tension construction of assembled components, due to the irregular shape of components and rubber gaskets, the tension load of each tension point cannot be accurately determined by using the present method of gradual approximation and continuous adjustment based on experience and observation, thus it is difficult to ensure that the widths of all seams of assembling components are always the same, which affects positioning accuracy and quality of assembling components. At the same time, uncoordinated load of each tension point makes the component produce unexpected additional stress.

Therefore, it is an important prerequisite for ensuring that the rubber gasket can be evenly compressed, to determine position of the centroid of reaction force of the gasket of prefabricated component of assembly type, so as to make the centroid of reaction force of the rubber gasket coincide with the geometric centroid of the assembling component as far as possible in the assembly process.

Since the rubber gasket is a typical material with nonlinear elasticity, there is no linear relationship between the compression amount and the reaction force amount when it is compressed, especially in the case of different seam widths 8, 9 and 10, the reaction force distributed along the rubber gasket is very complicated. when using the Jack to prestress the component, the tension load exerted by each Jack must be determined according to form of the reaction force of the rubber gasket. When the seam widths 8, 9 and 10 are even, compression amounts of the rubber gasket are same, and the centroid of reaction force of the rubber gasket coincides with the geometric centroid thereof. When the seam widths 8, 9 and 10 are uneven, the centroid of reaction force will deviate from the geometric centroid. The process of component assembly and tension is actually the process of constantly adjusting tension load of each Jack and adjusting the centroid of reaction force of the gasket by external force to approach the geometric centroid continuously, therefore in state of different seam widths, calculating the centroid position of the reaction force of the gasket is an important prerequisite to determine the tension load of each Jack and ensure that the assembly tension is in place.

SUMMARY OF AN EMBODIMENT OF THE INVENTION

In view of the above complex problems, the inventor of an embodiment of the invention studied carefully and creatively proposed a calculation method, which can be used to calculate the overall elastic centroid of the reaction force of the rubber gasket with nonlinear elasticity during the tension process of the prefabricated structural components of assembly type, and can be used in computer programming and practical applications.

An object of the present invention is to provide a Centroid calculation method for nonlinear elastic reaction force of gasket of prefabricated components of assembly type, in which during assembly process of prefabricated structural components, an overall composite centroid of elastic reaction force of rubber gaskets with nonlinear characteristics material can be calculated when the waterproof rubber gaskets set between the components are compressed to different states with tension loads, thus tension load at next moment of tensioning Jack can be determined, to gradually approach a target position of the components of assembly type, and achieve a preset seam width and ensure that the seam width is even.

In order to achieve above object, the present invention provides a computer implemented centroid calculation method for nonlinear elastic reaction force of gasket of prefabricated components of assembly type as specified in claim 1.

The method may further include establishing corresponding amount set Es of deformation modulus of rubber gasket under

$$F_i = E_{si} \times ((Z_0 - \frac{Z_i}{2}) / Z_0) \times A_0$$

different compression amount, calculating an elastic reaction force $\phantom{xx}$ of the rubber gasket for each point of the coordinate set $\Omega$ of center points of micro-segments of centerline of the rubber gasket, for elastic reaction force $F_i$ of each point, a moment is calculated for X-axis and Y-axis of coordinate system; according to principle that moment of composite force is equal to sum of moments of the micro-segments, coordinates of the centroid $K_F$ of reaction force of the rubber gasket are obtained by formulae 3 and 4:

$$X_K = \frac{\sum_{i=1}^{n} F_i \times x_i}{\sum_{i=1}^{n} F_i} = \frac{\sum_{i=1}^{n} E_{si} \times ((Z_0 - \frac{Z_i}{2})/Z_0) \times A_0 \times x_i}{\sum_{i=1}^{n} E_{si} \times ((Z_0 - \frac{Z_i}{2})/Z_0) \times A_0} = \frac{\sum_{i=1}^{n} E_{si} \times ((Z_0 - \frac{Z_i}{2})/Z_0) \times x_i}{\sum_{i=1}^{n} E_{si} \times ((Z_0 - \frac{Z_i}{2})/Z_0)} \quad (3)$$

$$Y_K = \frac{\sum_{i=1}^{n} F_i \times y_i}{\sum_{i=1}^{n} F_i} = \frac{\sum_{i=1}^{n} E_{si} \times ((Z_0 - \frac{Z_i}{2})/Z_0) \times A_0 \times y_i}{\sum_{i=1}^{n} E_{si} \times ((Z_0 - \frac{Z_i}{2})/Z_0) \times A_0} = \frac{\sum_{i=1}^{n} E_{si} \times ((Z_0 - \frac{Z_i}{2})/Z_0) \times y_i}{\sum_{i=1}^{n} E_{si} \times ((Z_0 - \frac{Z_i}{2})/Z_0)} \quad (4)$$

In said Step 1, the plane of the prefabricated component of assembly type where the rubber gasket is located is captured by a camera device with imaging plane kept parallel to plane of the component, and an edge of the plane of the component kept parallel to the imaging plane as far as possible.

Said step 4 can include the following sub-steps:

Sub-step 4.1 of correcting the structural outer contour line of the component, in which all auxiliary lines of contour lines containing the structural outer contour lines in area where the structural outer contour line of the component is located are marked, so as to assist in accurately identifying the image information of the structural outer contour line of the component;

Sub-step 4.2 of correcting the rubber gasket, in which all auxiliary lines of the gasket that include the rubber gasket in area where the rubber gasket is located are marked, so as to accurately identify the image information of the rubber gasket;

Sub-step 4.3: correcting the bolt holes, in which all auxiliary lines of positions of the bolt holes that include the bolt holes in area where the bolt holes are located are marked, so as to accurately identify the image information of positions of the bolt holes.

Said Step 5 contains the following sub-steps:

Sub-step 5.1 of picking outermost or innermost edge pixels according to the structural outer contour line of the component in the image, and using distance information corresponding to each pixel in the image frame to establish coordinate set of all the edge pixels in the order of X axis and Y axis, which is defined as the coordinate set $\Gamma$ of the structural outer contour line of the component;

Sub-step 5.2 of picking outermost or innermost edge pixels for the positions of the bolt holes in the image, in which since positions of bolt holes are of a regular shape, coordinates of center points of the positions of the bolt holes are determined by an image center point recognition algorithm, and a coordinate set is established for of the center points of the positions of all bolt holes in the image, defined as coordinate set $\Pi$ of points of the positions of the bolt holes;

Sub-step 5.3 of picking a skeleton contour line of the image of the rubber gasket, and identifying center line of the skeleton contour line of the rubber gasket image, after picking the center line, establish a coordinate set of the center points of the micro-segments of the center line of the rubber gasket, in which the center line of the rubber gasket is composed of a series of linear square micro-segments, length of which is equal to width of the seal gasket, and a coordinate set $\Omega$ of the center points of the micro segments of the center line of the rubber gasket is established; wherein the coordinate set $\Omega$ of the center points of the micro segments of the center line of the rubber gasket can be established by any one method of:

1) Circle intercepting axis method:
according to the XOY plane coordinate system, taking any point of the center line of the rubber gasket as the starting point, drawing a circle with the width $\lambda$ of the rubber gasket as the radius, and taking an intersection point of the circle and the center line as a new circle center, then drawing another circle with the width $\lambda$ of the rubber gasket as the radius, and taking an intersection point of the circle and the center line as next new circle center, then drawing another circle with the width $\lambda$ of the rubber gasket as the radius, repeating above procedure until it reaches an end point of center line of the gasket or returns to the starting point, then recording coordinates of all of the intersection points sequentially to form the coordinate set $\Omega$ of the center points of the micro segments of the center line of the rubber gasket.

2) Coordinate values traversal method:

establishing a coordinate set $\Psi$ of the center line of the rubber gasket according to the XOY plane coordinate system, in which the width of the rubber gasket is $\lambda$, taking a subset of the coordinate set $\Psi$ of the center line of the rubber gasket as the coordinate set $\Omega$ of the center points of the micro segments of the center line of the rubber gasket, and taking a corner point $\Psi_i$ of the rubber seal of the pad as a starting point to calculate absolute distances from the starting point for the adjacent coordinate points one by one in order of adjacency; when absolute distance between nth point $\Psi_{i+n}$ (n=1,2,...,n) adjacent to the starting point and the starting point $\delta_n \geq \lambda$, in which

$$\delta_n = \sqrt{\left|(x_i - x_{i+n})^2 + (y_i - y_{i+n})^2\right|}$$ , the point $\Psi_{i+n}$ is recorded in the coordinate set $\Omega$ of the center points of the micro segments of the center line of the rubber gasket, and the point $\Psi_{i+n}$ is taken as a new starting point until all coordinate points of the coordinate set $\Psi$ are traversed.

According to the above structure, the Centroid calculation method for nonlinear elastic reaction force of gasket of prefabricated components of assembly type of an embodiment of the invention has the following advantages:

1. A reasonable adjustment of the action centroid of the Jack is realized, so that the centroid of reaction force of the gasket coincides with the centroid of the gasket, thus when the assembly of the components is completed, the compression degree of each gasket between the components is same, and the seam widths of the components are same;

2. A calculation method for centroid of nonlinear elastic reaction force of the gasket is established, applied to the assembly of prefabricated components, which can improve the assembly accuracy, quality and efficiency of prefabricated components;

3. It is easy to use and convenient for practical application;

4. It can be applied in assembled structures such as transit stations, sections, entrances, air ducts and other assembly structures of railway and urban rail, large underground space development assembly structures, underground pipelines and comprehensive pipe corridor assembly structures, urban underground pedestrian passageways, underground road tunnel assembly structure, and other similar projects built in manner of prefabricated assembly, and has a wide range of promotion significance.

Details of the present invention can be obtained from the following description and the accompanying drawings.

DESCRIPTION OF THE FIGURES

Figs.1A and 1B show schematic diagrams of prefabricated components of the present invention before and after assembly;

Fig. 1C shows an enlarged schematic diagram of the gap in Fig.1B;

Figs.2A and 2B show schematic diagrams of the imaging location of the present invention;

Fig.3 shows the key information of the extracted image of the present invention;

Fig.3B shows an enlarged diagram in Fig.3;

Fig.4 shows the coordinate set for establishing key image points;

Figs.5A to 5C show a method for inversely calculating the seam widths at various portions of the rubber gasket of the present invention.

Reference Numeral:

1: position of bolt hole;

3: structural outer contour line of the component;

7: rubber gasket;

103: coordinate set $\Gamma$ of the structural outer contour line of the component;

101: coordinate set $\Pi$ of points of the positions of the bolt holes;

107: coordinate set $\Omega$ of the center points of the micro segments of the center line of the rubber gasket;

12: geometric centroid of rubber gasket;

11: centroid of reaction force of rubber gasket;

13: micro-segment of rubber gasket.

## DETAILED DESCRIPTION OF AN EMBODIMENT OF THE INVENTION

Figs.1A, 1B, 1C, 2A, 2B, 3, 3A, 4, 5A, 5B, and 5C show the Centroid calculation method for nonlinear elastic reaction force of gasket of prefabricated components of assembly type of an embodiment of the invention.

The Centroid calculation method for nonlinear elastic reaction force of gasket of prefabricated components of assembly type comprises:

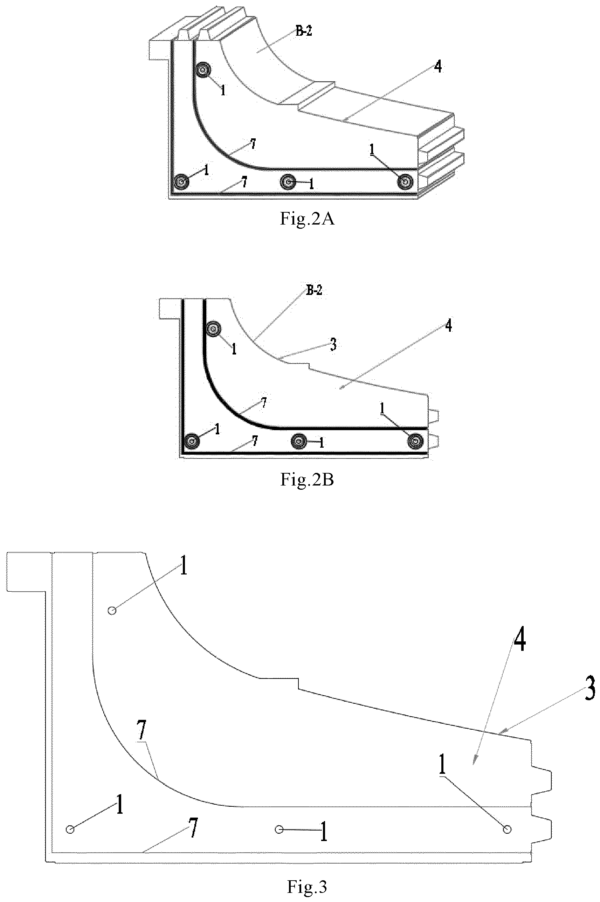

Step 1 of obtaining an image of a prefabricated component of assembly type to determine positions of a structural outer contour line 3 of the prefabricated component, positions of bolt holes 1 and the rubber gasket 7, wherein the plane (assembly plan 4) of the prefabricated component of assembly type where the rubber gasket is located can be captured by a camera device, which captures the planes (as shown in Figs. 2A and 2B) of the rubber gaskets with different shapes located in different prefabricated components of assembly type, with imaging plane thereof kept parallel to plane of the component, and an edge of the plane of the component kept parallel to the imaging plane as far as possible;

Step 2 of correcting the obtained image in order to better keep the image of plane of the component consistent with real one, wherein the correction includes image distortion and tilt distortion correction, and an image of the component plane where the rubber gasket is captured in said Step 1 is corrected by using an image distortion correction algorithm and a tilt correction algorithm, to ensure that the image of the plane of the component where the rubber gasket is located is consistent with reality;

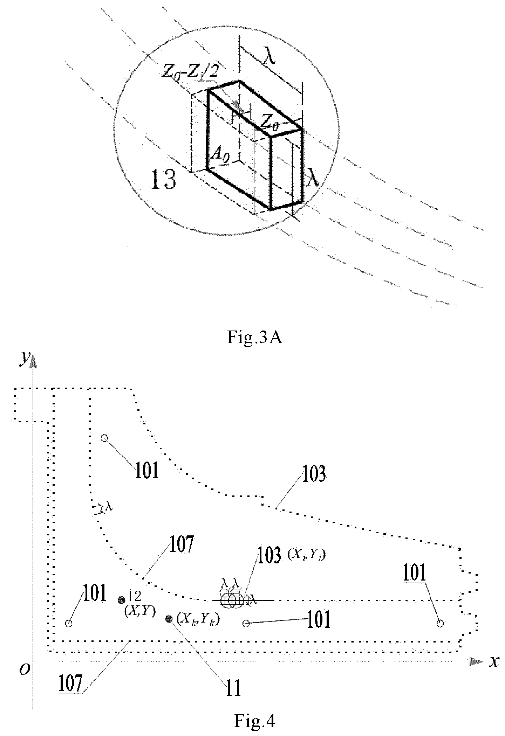

Step 3 of extracting key information of the image, obtaining images of a component edge of the plane of the component, an edge of the rubber gasket and edges of positions of the bolt holes, as shown in Fig.3 and 3A, wherein the image edge information can be extracted from the image of the component plane on which the rubber gasket is located, by using an image processing function (edge function), to obtain the images of a component edge of the plane of the component, an edge of the rubber gasket and edges of positions of the bolt holes;

Step 4 of correcting the key information of components in the image; in order to reduce interference and improve accuracy, the key information of the image of the component plane on which the rubber gasket is located identified in said Step 3 is manually corrected by tablet computer finger touch or using tools such as computer mouse or so, to obtain the key image information which only includes the structural outer contour line 3 of the prefabricated component, the rubber gasket 7 and the positions of bolt holes 1 while removing other non-critical image information, said Step 4 can include the following sub-steps:

Sub-step 4.1 of correcting the structural outer contour line of the component, in which all auxiliary lines of contour lines containing the structural outer contour lines in area where the structural outer contour line of the component is located are marked by tablet computer finger touch or using a tool such as computer mouse or so, so as to assist in accurately identifying the image information of the structural outer contour line 3 of the component;

Sub-step 4.2 of correcting the rubber gasket, in which all auxiliary lines of the gasket that include the rubber gasket in area where the rubber gasket is located are marked by tablet computer finger touch or using a tool such as computer mouse or so, so as to accurately identify the image information of the rubber gasket 7;

Sub-step 4.3: correcting the bolt holes manually, in which all auxiliary lines of positions of the bolt holes that include the bolt holes in area where the bolt holes are located are marked by tablet computer finger touch or using a tool such as computer mouse or so, so as to accurately identify the image information of positions of the bolt holes 1;

Step 5 of establishing a coordinate set of key image points of the component, as shown in Fig.4; for corrected image that contains only key information of the structural outer contour line 1 of the component, the rubber gasket 7 and the positions of the bolt holes 1, establishing a coordinate system on the image, that is, establishing a coordinate system by selecting any point O on the image as origin, preferably, selecting corner point of the image can be selected as the coordinate origin to establish a two-dimensional plane coordinate system, which is defined as the XOY plane coordinate system; establishing a coordinate set 103 of image points of the structural outer contour line 3 of the component, a coordinate set 101 of image points of center points of the positions of the bolt holes 1, and a coordinate set 107 of center points of micro-segments of center line of the rubber gasket, said Step 5 comprises:

Sub-step 5.1 of establishing the coordinate set 103 of image points of the structural outer contour line 3 of the component, that is, picking outermost or innermost edge pixels according to the structural outer contour line of the component in the image, and using distance information corresponding to each pixel in the image frame to establish coordinate set of all the edge pixels in the order of X axis and Y axis, which is defined as the coordinate set $\Gamma$ of the structural outer contour line of the component; in which at the same time, the image of the structural outer contour line of the component is compared with actual size of the component, a ratio of the image to the actual size of the component is calculated, then converted to the actual size of the component represented by each pixel, which is stored in a computer database;

Sub-step 5.2 of establishing the coordinate set 101 of image points of center points of the positions of the bolt holes 1, that is, picking outermost or innermost edge pixels for the positions of the bolt holes in the image, in which since positions of bolt holes are of a regular shape which is usually a circular, coordinates of center points of the positions of the bolt holes are determined by an image center point recognition algorithm, and a coordinate set is established for of the center points of the positions of all bolt holes in the image, defined as coordinate set $\Pi$ 101 of points of the positions of the bolt holes, which is stored in a computer database;

Sub-step 5.3 of automatically establishing the coordinate set of center points of micro-segments of center line of the rubber gasket;

Since the shape of the rubber gasket is generally a strip with a fixed width, a skeleton contour line of the image of the rubber gasket is picked, and a center line of the skeleton contour line of the rubber gasket image is identified. For simplifying calculation, after picking the center line, a coordinate set of the center points of the micro-segments of the center line of the rubber gasket is established, in which the center line of the rubber gasket is composed of a series of linear square micro-segments, length of which is equal to width of the seal gasket, that is, the side length of the square micro-segment is the width of the rubber gasket, which is assumed to be $\lambda$. To establish the coordinate set of center points of micro-segments of center line of the rubber gasket, which is defined as the coordinate set $\Omega$ 107 of center points of micro-segments of center line of the rubber gasket, and can be established by one of following methods:

1) Circle intercepting axis method:

according to the XOY plane coordinate system, taking any point of the center line of the rubber gasket as a starting point, drawing a circle with the width $\lambda$ of the rubber gasket as the radius, and taking an intersection point of the circle and the center line as a new circle center, then drawing another circle with the width $\lambda$ of the rubber gasket as the radius, and taking an intersection point of the circle and the center line as next new circle center, then drawing another circle with the width $\lambda$ of the rubber gasket as the radius, and so on, until it reaches an end point of center line of the gasket or returns to the starting point, then recording coordinates of all of the intersection points sequentially to form the coordinate set (defined as $\Omega$) of the center points of the micro segments of the center line of the rubber gasket;

2) Coordinate values traversal method:

establishing a coordinate set defined as $\Psi$ of the center line of the rubber gasket which is stored in a computer database, according to the XOY plane coordinate system, in which since the rubber gasket is made of homogeneous material and with a fixed width which is defined as $\lambda$, a subset of the coordinate set $\Psi$ of the center line of the rubber gasket is taken as the coordinate set $\Omega$ of the center points of the micro segments of the center line of the rubber gasket, and a corner point $\Psi_i$ of the rubber seal of the pad is taken as a starting point to calculate absolute distances from the starting point for the adjacent coordinate points one by one in order of adjacency; when absolute distance between nth point $\Psi_{i+n}$ (n=1,2,...,n) adjacent to the starting point and the

starting point $\delta_n \geq \lambda$, in which $\delta_n = \sqrt{|(x_i - x_{i+n})^2 + (y_i - y_{i+n})^2|}$, the point $\Psi_{i+n}$ is recorded in the coordinate set $\Omega$ of the center points of the micro segments of the center line of the rubber gasket of the coordinate set $\Psi$, and the point $\Psi_{i+n}$ is taken as a new starting point until all coordinate points of the coordinate set $\Psi$ are traversed;

If there are two or more pieces of rubber gaskets, then coordinate sets 107 of center points of micro-segments of center line of the rubber gasket respectively, which are stored in a computer database;

Step 6 of calculating a geometric centroid of the rubber gasket.

Since any point 103 of the coordinate set $\Omega$ of center points of micro-segments of centerline of a rubber gasket represents a square micro-segment 13 of the rubber gasket, length of the micro-segment is equal to a width $\lambda$ of the gasket, areas of all of the square micro-segments of the rubber gasket are $A_0 = \lambda^2$; for coordinates and areas of all points $(x_i, y_i)$ of the coordinate set $\Omega$ 107 of center points of micro-segments of centerline of a rubber gasket, area moments are calculated for X axis and Y axis, so as to calculate geometric centroid of the rubber gasket, in which there are n points in the coordinate set $\Omega$ of center points of micro-segments, and coordinate of the geometric centroid 12 in the XOY plane is obtained by formulae 1 and 2:

$$X = \frac{\sum_{i=1}^{n} A_0 \times x_i}{\sum_{i=1}^{n} A_0} = \frac{A_0 \times \sum_{i=1}^{n} x_i}{n A_0} = \frac{\sum_{i=1}^{n} x_i}{n} \tag{1}$$

$$Y = \frac{\sum_{i=1}^{n} A_0 \times y_i}{\sum_{i=1}^{n} A_0} = \frac{A_0 \times \sum_{i=1}^{n} y_i}{n A_0} = \frac{\sum_{i=1}^{n} y_i}{n} \tag{2};$$

Step 7 of calculating a centroid of reaction force of the rubber gasket.

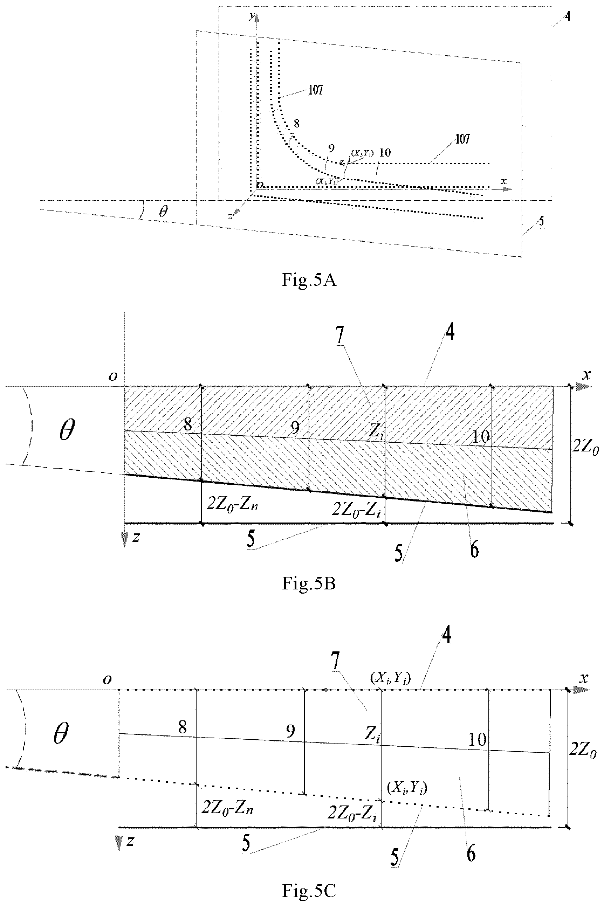

Distance between the interface between prefabricated components to be assembled and assembled prefabricated components is monitored in real time by using laser or other measurement techniques, in which after contact surfaces of prefabricated component to be assembled and assembled prefabricated component are in full contact, under static balance state of tension of the Jack, n monitoring values $Z_i$ of widths of seams of the contact surfaces of prefabricated component to be assembled and assembled prefabricated component are obtained by monitoring the seam width between the contact surfaces of n different positions of prefabricated components in real time, in which i=1, 2, ...n; since there are two pieces of rubber gaskets with same shape on the contact surface between the prefabricated components to be assembled and the assembled prefabricated components, and the compression amount of the rubber gasket on same position is same, actual compression amount of the rubber gasket is result of initial thickness $Z_0$ of the rubber gasket subtracted by a half of measured value of actual seam width (that is, $Z_i/2$), that is, $Z_0 - Z_i/2$; according to the measured n values of the compression amount of rubber gaskets, a surface equation is established within a same plane coordinate system corresponding to the coordinate set $\Omega$ 107 of center points of micro-segments of centerline of the rubber gasket, and the width and deformation amount of the seam are calculated according to coordinate of each point; then a dynamic database Z is established according in order of time, which can be called the database for using in every subsequent tension.(it is also possible to determine compression plane 5 of the gasket by actually measuring the seam widths 8, 9 and 10 of the non-collinear three-point positions at the seam of structural outline, according to coordinate position information $(x_i, y_i)$ on the plane 4 of the gasket and the same coordinate position information $(x_i, y_i)$ of the corresponding position on the compression plane 5, as well as relationship of the angle $\theta$ between the plane 4 and the compression plane 5, the seam width value $Z_i$ corresponding to the coordinates $(x_i, y_i)$ of center points of micro-segments of center line of the rubber gasket is calculated inversely according to the similar triangle rule (as shown in Figs. 5A, 5B, and 5C).

According to the experimental data of rubber gasket material used in prefabricated components, corresponding amount set $E_S$ of deformation modulus of rubber gasket under different compression is established and stored in the computer database.

$$F_i = E_{si} \times ((Z_0 - \frac{Z_i}{2}) / Z_0) \times A_0$$

An elastic reaction force ⟨ ⟩ of the rubber gasket is calculated for each point of the coordinate set $\Omega$ of center points of micro-segments of centerline of the rubber gasket, for elastic reaction force $F_i$ of each point 107, a moment is calculated for X-axis and Y-axis of coordinate system; according to principle that moment of composite force is equal to sum of moments of the micro-segments, coordinates of the centroid 11 of reaction force of the rubber gasket are obtained by formulae 3 and 4:

$$X_{\kappa} = \frac{\sum\limits_{i=1}^{n} F_i \times x_i}{\sum\limits_{i=1}^{n} F_i} = \frac{\sum\limits_{i=1}^{n} E_{si} \times ((Z_0 - \frac{Z_i}{2})/Z_0) \times A_0 \times x_i}{\sum\limits_{i=1}^{n} E_{si} \times ((Z_0 - \frac{Z_i}{2})/Z_0) \times A_0} = \frac{\sum\limits_{i=1}^{n} E_{si} \times ((Z_0 - \frac{Z_i}{2})/Z_0) \times x_i}{\sum\limits_{i=1}^{n} E_{si} \times ((Z_0 - \frac{Z_i}{2})/Z_0)} \quad (3)$$

$$Y_{K} = \frac{\sum\limits_{i=1}^{n} F_i \times y_i}{\sum\limits_{i=1}^{n} F_i} = \frac{\sum\limits_{i=1}^{n} E_{si} \times ((Z_0 - \frac{Z_i}{2})/Z_0) \times A_0 \times y_i}{\sum\limits_{i=1}^{n} E_{si} \times ((Z_0 - \frac{Z_i}{2})/Z_0) \times A_0} = \frac{\sum\limits_{i=1}^{n} E_{si} \times ((Z_0 - \frac{Z_i}{2})/Z_0) \times y_i}{\sum\limits_{i=1}^{n} E_{si} \times ((Z_0 - \frac{Z_i}{2})/Z_0)} \quad (4)$$

The centroid of reaction force of the rubber gasket changes dynamically, in which the coordinates of centroid of reaction force of the rubber gasket are different under different tension balance.

In view of above, after rubber gaskets of the prefabricated components are in contact and compressed during assembling and tension process, it is required to ensure that the width of the seam between the assembled components is even, the rubber gasket is compressed evenly, with same elastic reaction force, in which centroid of reaction force of the rubber gasket is consistent with its plane centroid, so as to ensure the quality of assembly. However, since the width of the seam between the assembled components is often uneven due to various factors, elasticities of the rubber gasket at different portions of the components are different, and values of the elastic reaction forces are also different, such that inconsistency of the centroid of reaction force and the plane centroid of the rubber seal will arise. Therefore, it is required to monitor the tension force of the tension Jack corresponding to position of the bolt hole in real time, and determine the reaction force and the centroid of the reaction force of the rubber gasket under different assembly conditions by inverse calculation. Then by adjusting the tension force of the tension Jack, it is ensured that the centroid of the reaction force of the rubber gasket is coincident with the plane centroid as far as possible, so as to ensure the quality of assembly.

In view of above, the invention has the following advantages:

1. A reasonable adjustment of the action centroid of the Jack is realized, so that the centroid of reaction force of the gasket coincides with the centroid of the gasket, thus when the assembly of the components is completed, the compression degree of each gasket between the components is same, and the seam widths of the components are same;
2. A calculation method for centroid of nonlinear elastic reaction force of the gasket is established, applied to the assembly of prefabricated components, which can improve the assembly accuracy, quality and efficiency of prefabricated components;
3. It is easy to use and convenient for practical application;
4. It can be applied in assembled structures such as transit stations, sections, entrances, air ducts and other assembly structures of railway and urban rail, large underground space development assembly structures, underground pipelines and comprehensive pipe corridor assembly structures, urban underground pedestrian passageways, underground road tunnel assembly structure, and other similar projects built in manner of prefabricated assembly, and has a wide range of promotion significance.

It is obvious that the above descriptions are only examples and are not intended to limit the disclosure, application or use of the present invention. Although the embodiments have been described in the embodiments and described in the drawings, the present invention is not limited by the specific examples described by the examples and the drawings. The embodiments are currently considered the best mode to implement the teachings of an embodiment of the invention.

**Claims**

1. A computer-implemented centroid calculation method for nonlinear elastic reaction force of gasket of prefabricated components of assembly type, comprising:

   Step 1 of obtaining an image of a prefabricated component of assembly type to determine positions of a structural outer contour line (3) of the prefabricated component, positions of bolt holes (1) and the rubber gasket (7), wherein in said Step 1, the plane of the prefabricated component of assembly type where the rubber gasket (7) is located is captured by a camera device with imaging plane kept parallel to plane of the component, and an edge of the plane of the component kept parallel to the imaging plane as far as possible;

Step 2 of correcting the obtained image in order to better keep the image of plane of the component consistent with real one, wherein in Step 2, the correction includes image distortion and tilt distortion correction, and an image of the component plane where the rubber gasket (7) is captured in Step 1 is corrected by using an image distortion correction algorithm and a tilt correction algorithm, to ensure that the image of the plane of the component where the rubber gasket is located is consistent with reality;

Step 3 of extracting key information of the image, obtaining images of a component edge of the plane of the component, an edge of the rubber gasket (7) and edges of positions of the bolt holes (1);

Step 4 of correcting the key information of components in the image, wherein in Step 4, the key image information including only the structural outer contour line of the component, the rubber gasket and positions of the bolt holes is obtained with other non-critical image information being eliminated; and

Step 5 of establishing a coordinate set (103) of key image points of the component; for corrected image that contains only key information of the structural outer contour line (3) of the component, the rubber gasket (7) and the positions of the bolt holes (1), establishing a coordinate system on the image, establishing a two-dimensional plane coordinate system, defined as the XOY plane coordinate system, establishing a coordinate set (103) of image points of the structural outer contour line (3) of the component, a coordinate set (101) of image points of center points of the positions of the bolt holes (1), and a coordinate set (107) of center points of micro-segments (13) of center line of the rubber gasket (7);

Step 6 of calculating a geometric centroid (12) K of the rubber gasket (7), in which any point of the coordinate set (107) $\Omega$ of center points of micro-segments (13) of centerline of a rubber gasket (7) represents a square micro-segment (13) of the rubber gasket (7), length of the micro-segment (13) is equal to a width $\lambda$ of the gasket, areas of all of the square micro-segments (13) of the rubber gasket (7) are $A_0=\lambda^2$; for coordinates and areas of all points of the coordinate set (107) $\Omega$ of center points of micro-segments (13) of centerline of a rubber gasket (7), area moments are calculated for X axis and Y axis, so as to calculate geometric centroid (12) K of the rubber gasket (7), in which there are n points in the coordinate set (107) $\Omega$ of center points of micro-segments (13), and coordinate of the geometric centroid (12) K in the XOY plane is obtained by formulae 1 and 2:

$$x_K = \frac{\sum_{i=1}^{n} A_0 \times x_i}{\sum_{i=1}^{n} A_0} = \frac{A_0 \times \sum_{i=1}^{n} x_i}{nA_0} = \frac{\sum_{i=1}^{n} x_i}{n} \tag{1}$$

$$y_K = \frac{\sum_{i=1}^{n} A_0 \times y_i}{\sum_{i=1}^{n} A_0} = \frac{A_0 \times \sum_{i=1}^{n} y_i}{nA_0} = \frac{\sum_{i=1}^{n} y_i}{n} \tag{2};$$

Step 7 of calculating a centroid $K_F$ of reaction force of the rubber gasket (7), in which after contact surfaces of prefabricated component to be assembled and assembled prefabricated component are in full contact, n monitoring values $Z_i$ of widths of seams of the contact surfaces of prefabricated component to be assembled and assembled prefabricated component are obtained, in which i=1, 2, ... n; actual compression amount of the rubber gasket (7) is result of initial thickness $Z_0$ of the rubber gasket (7) subtracted by a half of measured value of actual seam width $Z_i/2$, that is, $Z_0-Z_i/2$; according to the measured n values of the compression amount of rubber gaskets (7), a surface equation is established within a same plane coordinate system corresponding to the coordinate set (107) $\Omega$ of center points of micro-segments (13) of centerline of the rubber gasket (7), and the width and deformation amount of the seam are calculated according to coordinate of each point; then a dynamic database Z is established according in order of time.

2.  The computer-implemented centroid calculation method for nonlinear elastic reaction force of gasket of prefabricated components of assembly type as in Claim 1, wherein said step 4 can include the following sub-steps:

Sub-step 4.1 of correcting the structural outer contour line (3) of the component, in which all auxiliary lines of contour lines containing the structural outer contour lines in area where the structural outer contour line (3) of the component is located are marked, so as to assist in accurately identifying the image information of the structural outer contour line (3) of the component;

Sub-step 4.2 of correcting the rubber gasket (7), in which all auxiliary lines of the gasket that include the rubber gasket (7) in area where the rubber gasket (7) is located are marked, so as to accurately identify the image information of the rubber gasket (7); and

Sub-step 4.3: correcting the bolt holes, in which all auxiliary lines of positions of the bolt holes (1) that include the bolt holes in area where the bolt holes are located are marked, so as to accurately identify the image information of positions of the bolt holes (1).

3. The computer-implemented centroid calculation method for nonlinear elastic reaction force of gasket of prefabricated components of assembly type as in Claim 1, wherein said Step 5 contains the following sub-steps:

Sub-step 5.1 of picking outermost or innermost edge pixels according to the structural outer contour line (3) of the component in the image, and using distance information corresponding to each pixel in the image frame to establish coordinate set of all the edge pixels in the order of X axis and Y axis, which is defined as the coordinate set (103) $\Gamma$ of the structural outer contour line (3) of the component;

Sub-step 5.2 of picking outermost or innermost edge pixels for the positions of the bolt holes (1) in the image, in which since positions of bolt holes (1) are of a regular shape, coordinates of center points of the positions of the bolt holes (1) are determined by an image center point recognition algorithm, and a coordinate set (101) is established for of the center points of the positions of all bolt holes (1) in the image, defined as coordinate set (101) $\Pi$ of points of the positions of the bolt holes (1);

Sub-step 5.3 of picking a skeleton contour line of the image of the rubber gasket (7), and identifying center line of the skeleton contour line of the rubber gasket (7) image, after picking the center line, establish a coordinate set (107) of the center points of the micro-segments (13) of the center line of the rubber gasket (7), in which the center line of the rubber gasket (7) is composed of a series of linear square micro-segments (13), length of which is equal to width of the seal gasket, and a coordinate set (107) $\Omega$ of the center points of the micro segments (13) of the center line of the rubber gasket (7) is established.

4. The computer-implemented centroid calculation method for nonlinear elastic reaction force of gasket of prefabricated components of assembly type as in Claim 3, wherein the coordinate set (107) $\Omega$ of the center points of the micro segments (13) of the center line of the rubber gasket (7) can be established by any one method of:

1) Circle intercepting axis method:

according to the XOY plane coordinate system, taking any point of the center line of the rubber gasket (7) as the starting point, drawing a circle with the width $\lambda$ of the rubber gasket (7) as the radius, and taking an intersection point of the circle and the center line as a new circle center, then drawing another circle with the width $\lambda$ of the rubber gasket (7) as the radius, and taking an intersection point of the circle and the center line as next new circle center, then drawing another circle with the width $\lambda$ of the rubber gasket (7) as the radius, repeating above procedure until it reaches an end point of center line of the gasket or returns to the starting point, then recording coordinates of all of the intersection points sequentially to form the coordinate set (107) $\Omega$ of the center points of the micro segments (13) of the center line of the rubber gasket (7);

2) Coordinate values traversal method:

establishing a coordinate set $\Psi$ of the center line of the rubber gasket (7) according to the XOY plane coordinate system, in which the width of the rubber gasket (7) is $\lambda$, taking a subset of the coordinate set $\Psi$ of the center line of the rubber gasket (7) as the coordinate set (107) $\Omega$ of the center points of the micro segments (13) of the center line of the rubber gasket (7), and taking a corner point $\Psi_i$ of the rubber seal of the pad as a starting point to calculate absolute distances from the starting point for the adjacent coordinate points one by one in order of adjacency; when absolute distance between nth point $\Psi_{i+n}$, adjacent to the starting point and the starting point $\delta_n \geq \lambda$, in which

$$\delta_n = \sqrt{\left| (x_i - x_{i+n})^2 + (y_i - y_{i+n})^2 \right|}$$

, the point $\Psi_{i+n}$ is recorded in the coordinate set (107) $\Omega$ of the center points of the micro segments (13) of the center line of the rubber gasket (7), and the point $\Psi_{i+n}$ is taken as a new starting point until all coordinate points of the coordinate set $\Psi$ are traversed.

**Patentansprüche**

1. Computerimplementiertes Schwerpunktberechnungsverfahren für die nichtlineare elastische Reaktionskraft der Dichtung von vorgefertigten Bauteilen des Baugruppentyps, umfassend:

   Schritt 1 des Erhaltens eines Bildes eines vorgefertigten Bauteils des Baugruppentyps zur Bestimmung der Positionen einer strukturellen Außenkonturlinie (3) des vorgefertigten Bauteils, der Positionen der Bolzenlöcher (1) und der Gummidichtung (7), wobei in dem Schritt 1 die Ebene des vorgefertigten Bauteils des Baugruppentyps, in der sich die Gummidichtung (7) befindet, von einer Kameravorrichtung erfasst wird, wobei die Bildebene parallel zur Ebene des Bauteils gehalten wird, und eine Kante der Ebene des Bauteils, die so weit wie möglich parallel zur Abbildungsebene gehalten wird;
   Schritt 2 der Korrektur des erhaltenen Bildes, um das Bild der Ebene des Bauteils besser konsistent mit dem realen Bild zu halten, wobei in Schritt 2 die Korrektur Bildverzerrung und Neigungsverzerrungskorrektur umfasst, und ein Bild der Komponentenebene, in der die Gummidichtung (7) in Schritt 1 erfasst ist, unter Verwendung eines Bildverzerrungskorrekturalgorithmus und eines Neigungskorrekturalgorithmus korrigiert wird, sicherzustellen, dass das Bild der Ebene des Bauteils, in dem sich die Gummidichtung befindet, mit der Realität übereinstimmt;
   Schritt 3 der Extraktion von Schlüsselinformationen des Bildes, Gewinnung von Bildern der Kante des Bauteils in der Ebene des Bauteils, der Kante der Gummidichtung (7) und der Kanten der Positionen der Schraubenlöcher (1);
   Schritt 4 der Korrektur der Schlüsselinformationen von Komponenten in dem Bild, wobei in Schritt 4 die Schlüsselbildinformationen, die nur die strukturelle äußere Konturlinie des Bauteils, die Gummidichtung und die Positionen der Schraubenlöcher umfassen, erhalten werden, wobei andere unkritische Bildinformationen eliminiert werden; und
   Schritt 5 zum Festlegen eines Koordinatensatzes (103) von Schlüsselbildpunkten der Komponente; für korrigierte Bilder, die nur Schlüsselinformationen über die strukturelle äußere Konturlinie (3) des Bauteils, die Gummidichtung (7) und die Positionen der Schraubenlöcher (1) enthalten, das Herstellen eines Koordinatensystems auf dem Bild, das Herstellen eines zweidimensionalen Ebenenkoordinatensystems, definiert als das Koordinatensystem der XOY-Ebene, das Herstellen eines Koordinatensatzes (103) von Bildpunkten der strukturellen äußeren Konturlinie (3) des Bauteils, einen Koordinatensatz (101) von Bildpunkten von Mittelpunkten der Positionen der Schraubenlöcher (1) und einen Koordinatensatz (107) von Mittelpunkten von Mikrosegmenten (13) der Mittellinie der Gummidichtung (7);
   Schritt 6 der Berechnung eines geometrischen Schwerpunkts (12) K der Gummidichtung (7), wobei jeder Punkt des Koordinatensatzes (107) $\Omega$ der Mittelpunkte der Mikrosegmente (13) der Mittellinie einer Gummidichtung (7) ein quadratisches Mikrosegment (13) der Gummidichtung (7) darstellt, wobei die Länge des Mikrosegments (13) gleich der Breite der Dichtung ist, die Flächen aller quadratischen Mikrosegmente (13) der Gummidichtung (7) sind $A0=\lambda2$; für die Koordinaten und Flächen aller Punkte $(x_i, y_i)$ des Koordinatensatzes (107) $\Omega$ der Mittelpunkte der Mikrosegmente (13) der Mittellinie der Gummidichtung (7) werden die Flächenmomente für die X-Achse und die Y-Achse berechnet, um den geometrischen Schwerpunkt (12) K der Gummidichtung (7) zu berechnen, in dem sich n Punkte im Koordinatensatz (107) $\Omega$ der Mittelpunkte der Mikrosegmente (13) befinden und die Koordinate des geometrischen Schwerpunkts (12) K in der XOY-Ebene durch die Formeln 1 und 2 erhalten wird:

$$x_K = \frac{\sum_{i=1}^{n} A_0 \times x_i}{\sum_{i=1}^{n} A_0} = \frac{A_0 \times \sum_{i=1}^{n} x_i}{n A_0} = \frac{\sum_{i=1}^{n} x_i}{n} \qquad (1)$$

$$y_K = \frac{\sum_{i=1}^{n} A_0 \times y_i}{\sum_{i=1}^{n} A_0} = \frac{A_0 \times \sum_{i=1}^{n} y_i}{n A_0} = \frac{\sum_{i=1}^{n} y_i}{n} \qquad (2) \; ;$$

   Schritt 7 zur Berechnung des Schwerpunkts KF der Reaktionskraft der Gummidichtung (7), bei dem nach dem Kontakt der Kontaktflächen des zu montierenden Bauteils und des zusammengebauten Fertigteils in vollem Kontakt die n Überwachungswerte Zi der Nahtbreiten der Kontaktflächen des zu montierenden und des montierten Fertigteils erhalten werden, in dem i=1, 2, ... n; die tatsächliche Kompressionsmenge der Gummidichtung (7) ergibt sich aus der Anfangsdicke Z der Gummidichtung (7) subtrahiert durch die Hälfte des gemessenen Wertes der tatsächlichen Nahtbreite Zi/2, d.h. Z0-Zi/2; Entsprechend den gemessenen N-Werten des Kompressionsbetrags von Gummidichtungen (7) wird eine Oberflächengleichung innerhalb desselben Ebenenkoordinatensystems aufgestellt, die dem Koordinatensatz (107) entspricht, $\Omega$ der Mittelpunkte der Mikrosegmente (13) der Mittellinie der Gummidichtung (7), und die Breite und der Verformungsbetrag der Naht werden entsprechend der Koordinate jedes Punktes berechnet; dann wird eine dynamische Datenbank Z in der Reihenfolge der Zeit erstellt.

**2.** Computerimplementiertes Schwerpunktberechnungsverfahren für die nichtlineare elastische Reaktionskraft der Dichtung von vorgefertigten Bauteilen des Baugruppentyps nach Anspruch 1, wobei der Schritt 4 kann die folgenden Unterschritte umfassen:

Unterschritt 4.1 der Korrektur der strukturellen äußeren Konturlinie (3) des Bauteils, wobei alle Hilfslinien von Konturlinien, die die strukturellen äußeren Konturlinien in dem Bereich enthalten, in dem sich die strukturelle äußere Konturlinie (3) des Bauteils befindet, markiert sind, um die genaue Identifizierung der Bildinformationen der strukturellen äußeren Konturlinie (3) des Bauteils zu unterstützen;

Unterschritt 4.2 der Korrektur der Gummidichtung (7), wobei alle Hilfsleitungen der Dichtung, die die Gummidichtung (7) in dem Bereich einschließen, in dem sich die Gummidichtung (7) befindet, markiert sind, um die Bildinformationen der Gummidichtung (7) genau zu identifizieren; und

Teilschritt 4.3: Korrektur der Schraubenlöcher, wobei alle Hilfslinien der Positionen der Schraubenlöcher (1), die die Schraubenlöcher im Bereich der Schraubenlöcher einschließen, markiert sind, um die Bildinformationen der Positionen der Schraubenlöcher (1) genau zu identifizieren.

**3.** Computerimplementiertes Schwerpunktberechnungsverfahren für die nichtlineare elastische Reaktionskraft der Dichtung von vorgefertigten Bauteilen der Bauart nach Anspruch 1, wobei der Schritt 5 die folgenden Teilschritte umfasst:

Unterschritt 5.1 des Auswählens der äußersten oder innersten Kantenpixel entsprechend der strukturellen äußeren Konturlinie (3) des Bauteils in dem Bild und der Verwendung von Abstandsinformationen, die jedem Pixel im Bildrahmen entsprechen, um einen Koordinatensatz aller Kantenpixel in der Reihenfolge der X-Achse und der Y-Achse zu erstellen, der als der Koordinatensatz (103) $\Gamma$ der strukturellen äußeren Konturlinie (3) des Bauteils definiert ist;

Unterschritt 5.2 des Auswählens der äußersten oder innersten Kantenpixel für die Positionen der Schraubenlöcher (1) im Bild, in dem die Koordinaten der Mittelpunkte der Positionen der Schraubenlöcher (1) durch einen Bildmittelpunkt-Erkennungsalgorithmus bestimmt werden, da die Positionen der Schraubenlöcher (1) eine regelmäßige Form haben, und ein Koordinatensatz (101) für die Mittelpunkte der Positionen aller Schraubenlöcher (1) in das Bild, definiert als der Koordinatensatz (101) $\Pi$ der Punkte der Positionen der Bolzenlöcher (1);

Unterschritt 5.3 des Auswählens einer Skelettkonturlinie des Bildes der Gummidichtung (7) und des Identifizierens der Mittellinie der Skelettkonturlinie des Gummidichtungsbildes (7), nach dem Aufnehmen der Mittellinie, Herstellen eines Koordinatensatzes (107) der Mittelpunkte der Mikrosegmente (13) der Mittellinie der Gummidichtung (7), wobei die Mittellinie der Gummidichtung (7) aus einer Reihe von linearen quadratischen Mikrosegmenten (13) besteht, deren Länge gleich der Breite der Dichtung ist, und ein Koordinatensatz (107) $\Omega$ der Mittelpunkte der Mikrosegmente (13) der Mittellinie der Gummidichtung (7) festgelegt ist.

**4.** Computerimplementiertes Schwerpunktberechnungsverfahren für die nichtlineare elastische Reaktionskraft der Dichtung von vorgefertigten Bauteilen des Baugruppentyps nach Anspruch 3, wobei der Koordinatensatz (107) $\Omega$ der Mittelpunkte der Mikrosegmente (13) der Mittellinie der Gummidichtung (7) durch ein beliebiges Verfahren wie folgt bestimmt werden kann:

1) Methode der Kreisabfangachse:

nach dem Ebenenkoordinatensystem XOY, indem man einen beliebigen Punkt der Mittellinie der Gummidichtung (7) als Ausgangspunkt nimmt, einen Kreis mit der Breite $\lambda$ der Gummidichtung (7) als Radius zeichnet, einen Schnittpunkt des Kreises und der Mittellinie als neuen Kreismittelpunkt nimmt und dann einen weiteren Kreis mit der Breite $\lambda$ zeichnet der Gummidichtung (7) als Radius und einen Schnittpunkt des Kreises und der Mittellinie als nächsten neuen Kreismittelpunkt, dann einen weiteren Kreis mit der Breite $\lambda$ der Gummidichtung (7) als Radius zeichnen, obiges Verfahren wiederholend, bis er einen Endpunkt der Mittellinie der Dichtung erreicht oder zum Ausgangspunkt zurückkehrt, dann das Aufzeichnen der Koordinaten aller Schnittpunkte nacheinander, um den Koordinatensatz (107) Ω der Mittelpunkte der Mikrosegmente (13) der Mittellinie der Gummidichtung (7) zu bilden;

2) Methode zum Durchlaufen von Koordinatenwerten:

Festlegen eines Koordinatensatzes Ψ der Mittellinie der Gummidichtung (7) gemäß dem Koordinatensystem der XOY-Ebene, in dem die Breite der Gummidichtung (7) λ beträgt, wobei eine Teilmenge des Koordinatensatzes Ψ der Mittellinie der Gummidichtung (7) als Koordinatensatz (107) Ω der Mittelpunkte der Mikrosegmente (13) der Mittellinie der Gummidichtung (7) verwendet wird, und einen Eckpunkt $\Psi_i$ der Gummidichtung des Polsters als Ausgangspunkt nehmen, um absolute Entfernungen vom Startpunkt für die benachbarten Koordinatenpunkte nacheinander in der Reihenfolge der Nachbarschaft zu berechnen, wenn der absolute Abstand zwischen dem n-ten Punkt $\Psi_{i+n}$, der an den Startpunkt angrenzt, und dem Ausgangspunkt δn≥λ, in dem

$$\delta_n = \sqrt{|(x_i - x_{i+n})^2 + (y_i - y_{i+n})^2|}$$

, Der Punkt $\Psi$i+n wird in dem Koordinatensatz (107) Ω der Mittelpunkte der Mikrosegmente (13) der Mittellinie der Gummidichtung (7) aufgezeichnet, und der Punkt $\Psi$i+n wird als neuer Startpunkt genommen, bis alle Koordinatenpunkte des Koordinatensatzes Ψ durchlaufen sind.

## Revendications

1. Méthode de calcul du centroïde mise en œuvre par ordinateur pour la force de réaction élastique non linéaire d'un joint d'étanchéité de composants préfabriqués de type assemblage, comprenant :

   Etape 1 d'obtention d'une image d'un composant préfabriqué de type assemblage pour déterminer les positions d'une ligne de contour extérieure structurelle (3) du composant préfabriqué, les positions des trous de boulons (1) et du joint en caoutchouc (7), dans laquelle, dans ladite étape 1, le plan du composant préfabriqué de type ensemble où se trouve le joint en caoutchouc (7) est capturé par un dispositif de caméra avec un plan d'imagerie maintenu parallèle au plan du composant, et un bord du plan du composant maintenu parallèle au plan d'imagerie dans la mesure du possible ;

   l'étape 2 de correction de l'image obtenue afin de mieux maintenir l'image du plan du composant cohérente avec l'image réelle, dans laquelle à l'étape 2, la correction comprend la correction de la distorsion de l'image et de la distorsion de l'inclinaison, et une image du plan du composant où le joint en caoutchouc (7) est capturé à l'étape 1 est corrigée à l'aide d'un algorithme de correction de distorsion d'image et d'un algorithme de correction d'inclinaison, pour s'assurer que l'image du plan du composant où se trouve le joint en caoutchouc est conforme à la réalité ;

   Etape 3 d'extraction des informations clés de l'image, obtention d'images d'un bord de composant du plan du composant, d'un bord du joint en caoutchouc (7) et des bords des positions des trous de boulons (1) ;

   l'étape 4 de la correction des informations clés des composants dans l'image, dans laquelle à l'étape 4, les informations clés de l'image, y compris uniquement la ligne de contour extérieure structurelle du composant, le joint en caoutchouc et les positions des trous de boulons, sont obtenues avec l'élimination des autres informations d'image non critiques ; et

   Etape 5 de l'établissement d'un ensemble de coordonnées (103) de points clés de l'image du composant ; pour une image corrigée qui ne contient que des informations clés de la ligne de contour extérieure structurelle (3) du composant, du joint en caoutchouc (7) et des positions des trous de boulons (1), l'établissement d'un système de coordonnées sur l'image, l'établissement d'un système de coordonnées plan bidimensionnelle, défini comme le système de coordonnées du plan XOY, l'établissement d'un ensemble de coordonnées (103) de points d'image de la ligne de contour extérieure structurelle (3) du composant, un ensemble de coordonnées (101) de points d'image des points centraux des positions des trous de boulons (1), et un ensemble de coordonnées (107) de points centraux de micro-segments (13) de la ligne médiane du joint en caoutchouc (7) ;

   Etape 6 du calcul d'un centroïde géométrique (12) K du joint en caoutchouc (7), dans lequel tout point de l'ensemble de coordonnées (107) Ω des points centraux des microsegments (13) de l'axe médian d'un joint en caoutchouc (7) représente un microsegment carré (13) du joint en caoutchouc (7), la longueur du micro-segment (13) est égale à une largeur du joint, les aires de tous les micro-segments carrés (13) du joint en caoutchouc (7) sont A0=λ2 ; pour les coordonnées et les aires de tous les points (xi,yi) de l'ensemble de coordonnées (107) Ω des points centraux des micro-segments (13) de l'axe médian d'un joint en caoutchouc (7), les moments de surface sont calculés pour l'axe X et l'axe Y, de manière à calculer le centroïde géométrique (12) K du joint en caoutchouc (7), dans lequel il y a n points dans l'ensemble de coordonnées (107) Ω des points centraux des micro-segments (13), et la coordonnée du centroïde géométrique (12) K dans le plan XOY est obtenue par les formules 1 et 2 :

$$x_K = \frac{\sum\limits_{i=1}^{n} A_0 \times x_i}{\sum\limits_{i=1}^{n} A_0} = \frac{A_0 \times \sum\limits_{i=1}^{n} x_i}{nA_0} = \frac{\sum\limits_{i=1}^{n} x_i}{n} \qquad (1)$$

$$y_K = \frac{\sum\limits_{i=1}^{n} A_0 \times y_i}{\sum\limits_{i=1}^{n} A_0} = \frac{A_0 \times \sum\limits_{i=1}^{n} y_i}{nA_0} = \frac{\sum\limits_{i=1}^{n} y_i}{n} \qquad (2) \; ;$$

Etape 7 du calcul d'un centroïde KF de la force de réaction du joint en caoutchouc (7), dans lequel après contact les surfaces de contact du composant préfabriqué à assembler et du composant préfabriqué assemblé sont en plein contact, n valeurs de surveillance Zi des largeurs des coutures des surfaces de contact du composant préfabriqué à assembler et du composant préfabriqué assemblé sont obtenues, où i=1, 2, ... n; la quantité de compression réelle du joint en caoutchouc (7) est le résultat de l'épaisseur initiale Z0 du joint en caoutchouc (7) soustraite de la moitié de la valeur mesurée de la largeur réelle du joint Zi/2, c'est-à-dire Z0-Zi/2 ; selon les valeurs N mesurées de la quantité de compression des joints en caoutchouc (7), une équation de surface est établie à l'intérieur d'un même système de coordonnées planes correspondant à l'ensemble de coordonnées (107) Ω des points centraux des micro-segments (13) de l'axe médian du joint en caoutchouc (7), et la largeur et la quantité de déformation du joint sont calculées en fonction de la coordonnée de chaque point ; puis une base de données dynamique Z est établie par ordre chronologique.

2. Méthode de calcul du centroïde mise en œuvre par ordinateur pour la force de réaction élastique non linéaire du joint d'étanchéité de composants préfabriqués de type d'assemblage selon la revendication 1, dans laquelle, Cette étape 4 peut inclure les sous-étapes suivantes :

   Sous-étape 4.1 de la correction de la ligne de contour extérieure structurelle (3) du composant, dans laquelle toutes les lignes auxiliaires des lignes de contour contenant les lignes de contour extérieures structurelles dans la zone où se trouve la ligne de contour extérieure structurelle (3) du composant sont marquées, de manière à aider à identifier avec précision les informations d'image de la ligne de contour extérieure structurelle (3) du composant ;
   Sous-étape 4.2 de correction du joint en caoutchouc (7), dans laquelle toutes les lignes auxiliaires du joint qui incluent le joint en caoutchouc (7) dans la zone où se trouve le joint en caoutchouc (7) sont marquées, de manière à identifier avec précision les informations d'image du joint en caoutchouc (7) ; et
   Sous-étape 4.3 : correction des trous d'éboulons, dans laquelle toutes les lignes auxiliaires de positions des trous d'éboulons (1) qui incluent les trous d'éboulons dans la zone où se trouvent les trous d'éboulons sont marquées, de manière à identifier avec précision les informations d'image des positions des trous d'éboulons (1).

3. Méthode de calcul du centroïde mise en œuvre par ordinateur pour la force de réaction élastique non linéaire du joint d'étanchéité de composants préfabriqués de type assemblage selon la revendication 1, dans laquelle ladite étape 5 contient les sous-étapes suivantes :

   Sous-étape 5.1 consistant à choisir les pixels de bord les plus extérieurs ou les plus internes en fonction de la ligne de contour extérieure structurelle (3) du composant dans l'image, et à utiliser les informations de distance correspondant à chaque pixel du cadre de l'image pour établir un ensemble de coordonnées de tous les pixels de bord dans l'ordre de l'axe X et de l'axe Y, qui est défini comme l'ensemble de coordonnées (103) Γ de la ligne de contour extérieure structurelle (3) du composant ;
   Sous-étape 5.2 consistant à choisir les pixels de bord les plus extérieurs ou les plus intérieurs pour les positions des trous de boulons (1) dans l'image, dans laquelle, puisque les positions des trous de boulons (1) sont de forme régulière, les coordonnées des points centraux des positions des trous de boulons (1) sont déterminées par un algorithme de reconnaissance du point central de l'image, et un ensemble de coordonnées (101) est établi pour des points centraux des positions de tous les trous de boulons (1) dans l'image, définie comme un ensemble de coordonnées (101) Π des points des positions des trous de boulons (1) ;
   Sous-étape 5.3 consistant à choisir une ligne de contour squelette de l'image du joint en caoutchouc (7) et à identifier la ligne médiane de la ligne de contour squelette de l'image du joint en caoutchouc (7), après avoir choisi la ligne centrale, établir un ensemble de coordonnées (107) des points centraux des micro-segments (13) de la ligne médiane du joint en caoutchouc (7), dans lequel la ligne médiane du joint en caoutchouc (7) est composée d'une série de micro-segments carrés linéaires (13), dont la longueur est égale à la largeur du joint d'étanchéité, et un jeu de coordonnées (107) $\Omega$ des points centraux des micro-segments (13) de la ligne médiane du joint en caoutchouc (7) est établi.

4. Méthode de calcul du centroïde mise en œuvre par ordinateur pour la force de réaction élastique non linéaire du joint d'étanchéité de composants préfabriqués de type d'assemblage selon la revendication 3, dans laquelle le jeu de coordonnées (107) $\Omega$ des points centraux des micro-segments (13) de la ligne médiane du joint en caoutchouc (7) peut être établi par n'importe quelle méthode de :

1) Méthode de l'axe d'interception du cercle :
selon le système de coordonnées du plan XOY, en prenant n'importe quel point de la ligne médiane du joint en caoutchouc (7) comme point de départ, en traçant un cercle avec la largeur $\lambda$ du joint en caoutchouc (7) comme rayon, et en prenant un point d'intersection du cercle et de la ligne centrale comme nouveau centre de cercle, puis en traçant un autre cercle de la largeur $\lambda$ du joint en caoutchouc (7) comme rayon, et en prenant un point d'intersection du cercle et de la ligne médiane comme centre du cercle suivant, puis en traçant un autre cercle de la largeur $\lambda$ du joint en caoutchouc (7) comme rayon, en répétant la procédure ci-dessus jusqu'à ce qu'il atteigne un point final de la ligne médiane du joint ou revienne au point de départ, puis en enregistrant les coordonnées de tous les points d'intersection de manière séquentielle pour former l'ensemble de coordonnées (107) $\Omega$ des points centraux des microsegments (13) de la ligne médiane du joint en caoutchouc (7) ;
2) Méthode de traversée des valeurs de coordonnées :
en établissant un ensemble de coordonnées $\Psi$ de l'axe du joint en caoutchouc (7) selon le système de coordonnées du plan XOY, dans lequel la largeur du joint en caoutchouc (7) est $\lambda$, en prenant un sous-ensemble de l'ensemble de coordonnées $\Psi$ de l'axe du joint en caoutchouc (7) comme l'ensemble de coordonnées (107) $\Omega$ des points centraux des microsegments (13) de l'axe du joint en caoutchouc (7), et en prenant un point d'angle $\Psi i$ du joint en caoutchouc de la pastille comme point de départ pour calculer les distances absolues à partir du point de départ pour les points de coordonnées adjacents un par un par ordre de contiguïté ; lorsque la distance absolue entre le nième point $\Psi_{i+n}$, adjacent au point de départ et le point de départ $\delta n \geq \lambda$, où

$$\delta_{\mathrm{n}} = \sqrt{\left| (x_{\mathrm{i}} - x_{i+n})^2 + (y_i - y_{i+n})^2 \right|}$$

, le point $\Psi i+n$ est enregistré dans l'ensemble de coordonnées (107) $\Omega$ des points centraux des microsegments (13) de la ligne médiane du joint en caoutchouc (7), et le point $\Psi i+n$ est pris comme nouveau point de départ jusqu'à ce que tous les points de coordonnées de l'ensemble de coordonnées $\Psi$ soient parcourus.

Fig.1A

Fig.1B

Fig.1C

Fig.2A

Fig.2B

Fig.3

Fig.3A

Fig.4

Fig.5A

Fig.5B

Fig.5C